# DEMANDE DE BREVET EUROPEEN

(11) **EP 4 574 278 A1**
(43) Date de publication de la demande: **25.06.2025**
(21) Numéro de dépôt: 23218890.4
(22) Date de dépôt: 20.12.2023
(51) Int. Cl.: B05D 1/12, B05D 5/06, B05D 7/00, G04B 5/16, G04B 19/12, G04B 19/04, G04B 29/02, G04B 45/00

(54) **ARTICLE, TEL QU'UN COMPOSANT HORLOGER, COMPORTANT UN SUBSTRAT ET UN REVÊTEMENT ABSORBANT LA LUMIÈRE VISIBLE**

(71) Demandeur: The Swatch Group Research and Development Ltd, 2074 Marin (CH)
(72) Inventeur: FRANÇOIS, Nicolas, 2000 Neuchâtel (CH); TERES, Nathalie, 2014 Bôle (CH)
(74) Mandataire: ICB SA

(57) **Abrégé**

Un aspect de l'invention concerne un article (10) comportant un substrat (1) et un revêtement multicouche (20) déposé sur le substrat (1), le revêtement (20) étant formé par l'association d'une pluralité de couches (21, 22, 23, 24) comportant un liant et des pigments, le revêtement (20) comportant des pigments de différentes granulométries.

## Description

### Domaine technique de l'invention

Le domaine de l'invention concerne les traitements de surface d'articles, tels que des articles décoratifs ou des composants horlogers.

L'invention concerne également un article, par exemple un composant horloger, revêtu par un tel revêtement absorbant la lumière visible.

L'invention trouve une application particulièrement intéressante dans le domaine de l'horlogerie, pour la décoration d'articles ou de composants utilisés dans les pièces d'horlogerie, par exemple les platines, les ponts, les rouages, les vis, les masses oscillantes, les cadrans, les index, les appliques, les disques de guichets, les aiguilles ou encore tout autre composant du mouvement ou de l'habillage externe d'une pièce horlogerie.

### Arrière-plan technologique

Il existe des revêtements absorbants la lumière visible et qui présente une absorption de la lumière supérieure à 99,8%.

On connait notamment le revêtement Vantablack^{®} à base de nanotubes de carbone orientés perpendiculairement à la surface du substrat et serrés les uns contre les autres. Un tel revêtement confère une couleur noire avec un coefficient d'absorption de 99,965% de la lumière visible.

Toutefois, un tel revêtement à base de nanotubes de carbone est très onéreux et présente des risques pour la santé, ces particules étant reconnues comme cancérigènes, mutagènes ou reprotoxiques.

Il est également connu la peinture acrylique Musou^{®} plus facile à utiliser et à appliquer et qui présente une absorption jusqu'à 99,4% de la lumière visible et une composante de clarté L* proche de 10. Toutefois, ce revêtement présente la particularité d'être très fragile et un contact léger avec le revêtement peu facilement occasionner un pelage du revêtement ou une dégradation de son absorption. Il est par exemple très compliqué de nettoyer ce type de revêtement sans dégrader son aspect esthétique, si une poussière ou une fibre s'y est déposée. Une telle peinture n'est pas aisément applicable par exemple dans le domaine horloger.

Par conséquent, il existe un besoin d'amélioration de ces revêtements absorbants la lumière visible permettant leur utilisation sur des articles qui peuvent être manipulés, par exemple des composants horlogers, sans risque pour la santé et sans risque d'une dégradation du revêtement par simple contact ou manipulation de l'article.

### Résumé de l'invention

Dans ce contexte, l'invention vise à proposer un article comportant un revêtement avec une très haute absorption de la lumière tout en évitant l'utilisation des nanotubes de carbone et/ou des particules de graphène.

A cette effet, l'invention concerne un article comportant un substrat et un revêtement multicouche déposé sur le substrat, le revêtement étant formé par l'association d'une pluralité de couches comportant un liant et des pigments, le revêtement comportant des pigments de différentes granulométries.

Selon l'invention, l'article revêtu par le revêtement décoratif absorbant la lumière visible selon l'invention permet d'avoir une composante de clarté L* inférieure à 20 avec des substrats de diverses natures.

Outre les caractéristiques évoquées dans le paragraphe précédent, l'article selon l'invention peut présenter une ou plusieurs caractéristiques complémentaires parmi les suivantes, considérées individuellement ou selon toutes les combinaisons techniquement possibles :
- le revêtement comporte des pigments de dimensions nanométriques et de dimensions micrométriques ;
- le revêtement comporte des billes de verre ;
- le revêtement comporte une sous-couche recouvrant au moins une portion du substrat, la sous-couche comportant des pigments dont la taille moyenne est de dimension nanométrique ;
- le revêtement comporte un empilement d'une pluralité de couches successives, superposées les unes sur les autres, recouvrant au moins partiellement la sous-couche, chacune des couches successives de l'empilement comportant des pigments dont la taille moyenne (d90) est différente de la taille moyenne des pigments de la couche qu'elle recouvre ;
- chacune des couches successives de l'empilement comporte des pigments dont la taille moyenne (d90) est supérieure à la taille moyenne (d90) des pigments de la couche qu'elle recouvre ;
- chaque couche n de l'empilement présente des pigments dont la taille moyenne (d90) équivaut à *n* * *k*/10 µm, où k est un facteur d'homothétie entre la taille moyenne (d90) des pigments de deux couches consécutives de l'empilement ;
- le revêtement comporte une pluralité de couches de différentes granulométries qui sont juxtaposées les unes par rapport aux autres et qui recouvrent respectivement une portion prédéterminée de la sous-couche ;
- les pigments de la pluralité de couches recouvrant la sous-couche sont de dimensions micrométriques ;
- le revêtement comporte une première couche recouvrant au moins partiellement une première portion de la sous-couche et une deuxième couche juxtaposée à la première couche et recouvrant au moins partiellement une deuxième portion de la sous-couche, différente de la première portion, les pigments de la deuxième couche présentant une taille moyenne (d90) supérieure à la taille moyenne (d90) des pigments de la première couche ;
- le revêtement comporte une première couche recouvrant au moins partiellement la sous-couche, la première couche comportant des agglomérats de pigments composés par un mélange de pigments avec des granulométries différentes ;
- la première couche comporte des agglomérats de pigments composés par le mélange de pigments dont la taille moyenne (d90) est de dimension nanométrique et de pigments dont la taille moyenne (d90) est de dimension micrométrique ;
- les agglomérats de pigments de la première couche sont constitués d'un pigment central de dimension micrométrique sur lequel est greffé chimiquement en périphérie une pluralité de pigments de dimensions nanométriques ;
- le liant de la pluralité de couches du revêtement est un polymère ;
- le liant de la pluralité de couches du revêtement est un acrylique, un polymère époxyde ou encore un polyuréthane ;
- les pigments de la pluralité de couches du revêtement sont du noir de carbone ;
- le revêtement présente une composante de clarté L* inférieure à 20 ;
- l'article est un composant horloger.

L'invention a également pour objet une pièce d'horlogerie comportant un tel composant horloger.

### Brève description des figures

Les buts, avantages et caractéristiques de la présente invention apparaîtront à la lecture de la description détaillée ci-dessous faisant référence aux figures suivantes :
- la figure 1 illustre schématiquement une vue en coupe d'un premier exemple de réalisation d'un article, tel qu'un composant horloger, comportant un substrat et un revêtement absorbant la lumière visible selon l'invention ;
- la figure 2 illustre schématiquement une vue en coupe d'un deuxième exemple de réalisation d'un article, tel qu'un composant horloger, comportant un substrat et un revêtement absorbant la lumière visible selon l'invention ;
- la figure 3 illustre schématiquement une vue en coupe d'un troisième exemple de réalisation d'un article, tel qu'un composant horloger, comportant un substrat et un revêtement absorbant la lumière visible selon l'invention ;
- la figure 4 illustre un exemple de réalisation d'un article selon l'invention.

### Description détaillée de l'invention

Dans la présente description, les propriétés colorimétriques du revêtement absorbant la lumière obtenu selon le procédé de dépôt d'un revêtement selon l'invention sont exprimées à l'aide de l'espace colorimétrique CIE L*a*b* et mesurées selon le standard CIE 1976 sur des échantillons polis avec un spectrophotomètre KONICA MINOLTA CM-3610-A, avec les paramètres suivants : source d'éclairage CIE D65 (lumière du jour 6500°K), inclinaison de 10°, mesures SCI (réflexion spéculaire incluse), zone de mesure de 4 mm de diamètre.

Un espace colorimétrique CIELAB (conforme aux normes CIE n°15, ISO 7724/1, DIN 5033 Teil 7, ASTM E-1164) présente une composante de clarté L*, représentative de la manière dont le matériau réfléchit la lumière, assimilable à la clarté, avec une composante a* qui est la composante vert/rouge et une composante b* qui est la composante bleu/jaune.

Dans la présente demande, la taille moyenne des particules et des pigments est caractérisée par rapport à la valeur d90 d'une distribution granulométrique.

### Premier exemple de réalisation

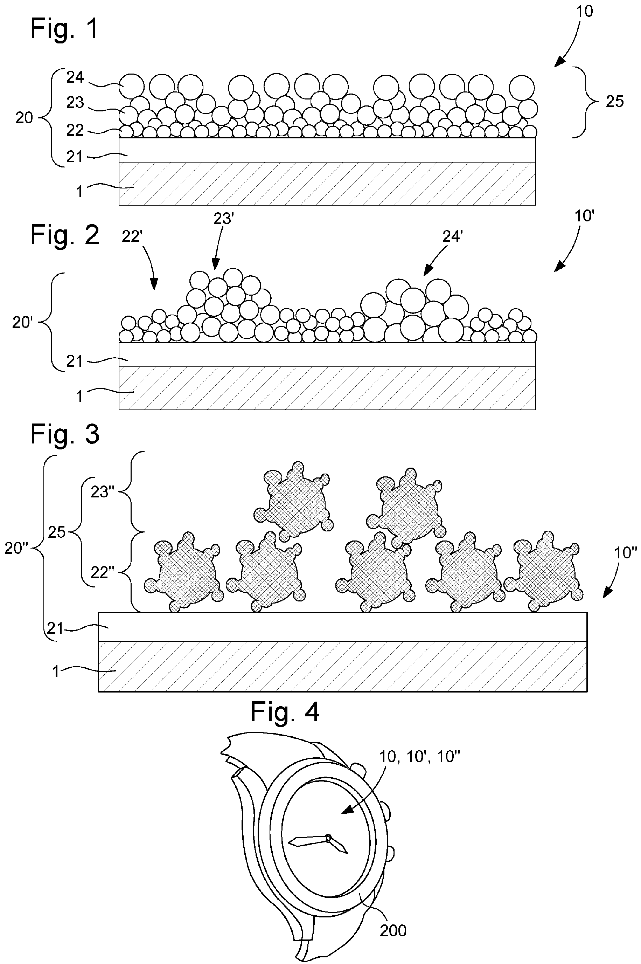

La figure 1 illustre schématiquement une vue en coupe d'un premier exemple de réalisation d'un article 10, tel qu'un composant horloger, comportant un substrat 1 ainsi qu'un revêtement 20 absorbant la lumière visible recouvrant au moins une portion du substrat 1 au moyen du procédé de dépôt 100 selon l'invention. Un tel revêtement 20 absorbant la lumière selon l'invention forme une structure multicouche comportant des pigments avec une granulométrie variable entre les couches, préférentiellement croissante avec l'augmentation du nombre de couches.

Préférentiellement, la densité des pigments entre les différentes couches du revêtement 20 est également variable, préférentiellement décroissante avec l'augmentation du nombre de couches.

L'article 10 est par exemple un composant horloger, par exemple une platine, un pont, une roue, une vis, une masse oscillante, un cadran, un index, une applique, un disque de guichet, une aiguille ou encore tout autre composant ou organe d'un mouvement d'horlogerie ou d'un composant d'habillage d'une pièce d'horlogerie auquel on souhaite donner une impression de couleur profonde et intense, sans reflet de lumière, avec une composante de clarté L* inférieure à 20.

La figure 3 illustre une pièce d'horlogerie 200 comportant un article 10 selon l'invention. Dans cet exemple de réalisation, l'article 10 selon l'invention est un cadran.

Le substrat 1 peut être de nature variable, par exemple en matière métallique, en matière polymère ou encore en matière céramique, voire en matière composite.

L'article 10 comporte un revêtement 20 non uniforme dont la composante de clarté L* est inférieure à 20 avec des divers substrats. A titre de comparaison, un procédé de revêtement par un dépôt de dépôt physique en phase vapeur (PVD pour Physical Vapor Déposition) d'une couche mince uniforme ne permet pas d'avoir un revêtement avec une composante de clarté L* inférieure à 20 en raison de la topologie des couches déposées. Avec un dépôt PVD, la composante de clarté L* d'un revêtement mat est comprise entre 25 et 30.

La structure multicouche particulière du revêtement 20 absorbant la lumière selon l'invention permet d'éviter les phénomènes de réflexion avec la surface visible du revêtement. Le revêtement 20 permet également de diffuser la lumière dans la structure créée par les différences de granulométrie des pigments qui composent le revêtement jusqu'à la piéger, de manière à obtenir une absorption maximale de la lumière.

Le revêtement 20 comporte une sous-couche 21 formant une couche de fond, configurée pour recouvrir le substrat 1, au moins sur une portion du substrat 1.

Préférentiellement, la sous-couche 21 recouvre totalement au moins une surface du substrat 1.

La sous-couche 21 présente une épaisseur suffisante pour que celle-ci soit homogène et opaque et que la perturbation optique du substrat 1 ne soit plus active. La sous-couche 21 présente par exemple une épaisseur égale ou supérieure à 1 µm et inférieure à 20 µm, et plus préférentiellement une épaisseur comprise entre 5 µm et 10 µm.

Préférentiellement, la sous-couche 21 est formée par le dépôt sur le substrat 1 d'un premier mélange liquide comportant un liant, des pigments, et un solvant, le solvant s'évaporant lors du séchage du premier mélange liquide le solvant s'évapore, le liant se rétractant autour des pigments créant ainsi la sous-couche 21 du revêtement 20.

Par exemple, la sous-couche est formée par le dépôt d'un premier mélange liquide comportant, en masse, de 30 à 40% de liant, de 50 à 60% de solvant et de 5 à 10% de pigments.

Par exemple, la sous-couche est formée par le dépôt d'un premier mélange liquide constitué, en masse, de 30% de liant acrylique, de 60% de solvants et de 10% de pigments noir de carbone Emperor^{®} 1600.

Optionnellement, la sous-couche 21 peut comporter également un agent matifiant, par exemple une nanosilice, pour accentuer davantage l'intensité du revêtement 20.

Optionnellement, la sous-couche 21 peut comporter également un agent dispersant facilitant la mise en suspension des pigments dans le mélange liquide.

Préférentiellement, le liant de la sous-couche 21 est un polymère, par exemple un acrylique, un polymère époxyde ou encore un polyuréthane.

Par exemple, la sous-couche 21 est formée par l'application d'une encre colorée.

Par exemple, la sous-couche 21 est formée par l'application d'une encre noire présentant des pigments de noir de carbone.

La sous-couche 21 est formée par pulvérisation, par sprayage, par trempage, par sérigraphie, par impression ou encore par tampographie du premier mélange liquide sur le substrat 1.

Préférentiellement, les pigments de la sous-couche 21 présentent une taille moyenne (d90) de dimension nanométrique, par exemple comprise entre 20 et 120 nm, préférentiellement inférieure à 100 nm. Ainsi, la sous-couche 21 est une couche homogène et de faible rugosité.

La sous-couche 21 est recouverte par un empilement 25 de plusieurs couches 22, 23, 24 superposées les unes aux autres, chaque couche de l'empilement 25 présentant des pigments dont la taille moyenne (d90) est différente de la taille moyenne des pigments de la couche qu'elle recouvre.

Préférentiellement, l'empilement 25 présente des pigments répartis selon une taille moyenne (d90) croissante en allant du substrat vers la surface du revêtement 20. Ainsi, chaque couche de l'empilement 25 présente des pigments avec une taille moyenne (d90) supérieure aux pigments de la couche qu'elle recouvre.

Préférentiellement, chaque couche n de l'empilement 25 présente des pigments dont la taille moyenne (d90) équivaut à *n* * *k*/10 µm, où k est un facteur d'homothétie entre la taille moyenne (d90) des pigments de la couche (n-1) précédemment déposée et la taille moyenne (d90) des pigments de la couche (n) à déposer, c'est-à-dire entre deux couches consécutives de l'empilement 25.

Préférentiellement le facteur d'homothétie est compris entre 5 et 1000.

Dans l'exemple de réalisation représenté à la figure 1, l'empilement 25 comporte trois couches 22, 23, 24 déposées successivement. Bien entendu, l'empilement 25 peut comporter au minimum deux couches successives ou plus de trois couches successives pour former la structure particulière de l'empilement 25 recouvrant la sous-couche 21.

La première couche 22 de l'empilement 25 comporte des pigments dont la taille moyenne (d90) est supérieure à la taille moyenne des pigments de la sous-couche 21, par exemple de taille micrométrique et inférieure à 20 µm, préférentiellement de l'ordre de 15 µm.

La deuxième couche 23 de l'empilement 25 recouvrant au moins partiellement la première couche 22 de l'empilement 25 comporte des pigments dont la taille moyenne (d90) est par exemple de l'ordre de 80 µm.

La troisième couche 24 de l'empilement 25 recouvrant au moins partiellement la deuxième couche 23 de l'empilement 25 comporte des pigments dont la taille moyenne (d90) est par exemple de l'ordre de 250 µm.

Chaque couche 22, 23, 24 est formée respectivement par dépôt successif d'un mélange liquide comportant un liant, des pigments, et un solvant, la taille moyenne (d90) des pigments des différents mélanges liquides variant selon le rapport mentionné précédemment pour former les différentes couches avec une granulométrie croissante, de sorte à augmenter la rugosité globale du revêtement.

Après application de chaque mélange par pulvérisation, par sprayage, par trempage, par sérigraphie, par impression ou encore par tampographie, le solvant s'évapore pour permettre une polymérisation et une rétractation du liant autour des pigments formant ainsi une couche solide recouvrant au moins partiellement la couche précédente ou la sous-couche 21, la nouvelle couche présentant une rugosité supérieure à la couche précédente.

Préférentiellement, le liant, la nature des pigments des différentes couches 22, 23, 24 de l'empilement 25 sont identiques.

Optionnellement, les couches 22, 23, 24 de l'empilement 25 peuvent comporter un agent matifiant, par exemple une nanosilice, pour accentuer davantage l'intensité de l'empilement 25 et plus généralement du revêtement 20.

Optionnellement, les couches 22, 23, 24 de l'empilement 25 peuvent comporter des billes de verre pour augmenter davantage la rugosité de l'empilement. Préférentiellement, les billes de verre sont utilisées dans la dernière couche de l'empilement 25.

Optionnellement, les couches 22, 23, 24 de l'empilement 25 peuvent comporter un agent dispersant facilitant la mise en suspension des pigments dans le premier mélange liquide.

Préférentiellement, le liant des couches 22, 23, 24 formant l'empilement 25 est un polymère, par exemple un acrylique, un polymère époxyde ou encore un polyuréthane.

Par exemple, les couches 22, 23, 24 formant l'empilement 25 sont formées par l'application d'encres colorées.

Préférentiellement, le liant, la nature des pigments, et le solvant utilisés pour la formation des couches de l'empilement 25 sont identiques à ceux utilisés pour la réalisation de la sous-couche 21.

Les pigments utilisés pour la formation des couches de l'empilement 25 peuvent également être de nature différente des pigments utilisés pour la réalisation de la sous-couche 21.

Préférentiellement, la densité des pigments dans les différentes couches 22, 23, 24 est variable.

Préférentiellement, la densité des pigments dans les couches 22, 23, 24 de l'empilement 25 est de plus en plus faible à mesure que la taille moyenne (d90) des pigments augmente dans les couches 22, 23, 24.

Par exemple, la première couche 22 de l'empilement 25 est réalisée à partir d'un mélange liquide comportant entre 4 et 10% en masse de pigments, préférentiellement entre 4 et 8% en masse de pigments.

Par exemple, la deuxième couche 23 de l'empilement 25 est réalisée à partir d'un mélange liquide comportant entre 1 et 4% en masse de pigments.

Par exemple, la troisième couche 24 de l'empilement 25 est réalisée à partir d'un mélange liquide comportant entre 0.5 et 4% en masse de pigments, préférentiellement entre 0.5 et 1% en masse de pigments.

Par exemple, le substrat 1 en laiton, par exemple pour la formation d'un cadran, sur lequel on vient appliquer un revêtement absorbant la lumière selon l'invention. Le substrat en laiton présente par exemple une épaisseur de 0,27mm.

La sous-couche 21 est appliquée sur le substrat en laiton par trempage à partir d'un premier mélange liquide constitué de 2 g de résine polyuréthane (Berlacryl), de 0.5 g de pigments noir de carbone Emperor 1600 et 2.8 g de diluant Berlaflex. On laisse sécher la couche 20 minutes pour permettre l'évaporation du diluant.

La première couche 22 de l'empilement 25 est appliquée sur la sous-couche 21 par trempage à partir d'un deuxième mélange liquide constitué de 2 g de résine polyuréthane (Berlacryl), de 0,3 g de pigments Living Ink et 3,5 g de diluant Berlaflex. On laisse sécher la couche 20 minutes pour permettre l'évaporation du diluant.

La deuxième couche 23 de l'empilement 25 est appliquée sur la première couche 22 par trempage à partir d'un troisième mélange liquide constitué de 2 g de résine polyuréthane (Berlacryl), de 0,2 g de pigments Norit A ultra E153 et 4 g de diluant Berlaflex. On laisse sécher la couche 20 minutes pour permettre l'évaporation du diluant.

La troisième couche 24 de l'empilement 25 est appliquée sur la deuxième couche 23 par trempage à partir d'un quatrième mélange liquide constitué de 2 g de résine polyuréthane (Berlacryl), de 0,2 g de pigments carbone Norit SX super E153, de 1,5 g de billes de verre 90-150 µm et 4 g de diluant Berlaflex. On laisse sécher la couche 20 minutes pour permettre l'évaporation du diluant.

Avec un tel revêtement 10, on obtient un cadran en laiton avec un revêtement de surface noir présentant une composante de clarté L* de 15,9.

### Deuxième exemple de réalisation

La figure 2 illustre schématiquement une vue en coupe d'un deuxième exemple de réalisation d'un article 10', tel qu'un composant horloger, comportant un substrat 1 ainsi qu'un revêtement 20 décoratif et présentant des propriétés d'absorption de la lumière visible.

Le revêtement 20' recouvre au moins une portion du substrat 1. Dans ce deuxième exemple de réalisation, le revêtement 20' selon l'invention forme une structure non uniforme composée de multizones à rugosité variable, les différentes zones du revêtement présentant des pigments avec différentes granulométries.

Préférentiellement, la densité des pigments entre les différentes zones du revêtement 20' est également variable, préférentiellement décroissante avec l'augmentation de la taille moyenne des pigments.

L'article 10' est par exemple un composant horloger, par exemple une platine, un pont, une roue, une vis, une masse oscillante, un cadran, un index, une applique, un disque de guichet, une aiguille ou encore tout autre composant ou organe d'un mouvement d'horlogerie ou d'un composant d'habillage d'une pièce d'horlogerie auquel on souhaite donner une impression de couleur profonde et intense, sans reflet de lumière, avec une composante de clarté L* inférieure à 20.

La structure multizone du revêtement 20' selon l'invention permet de créer des motifs en jouant sur différents niveaux d'absorption de la lumière visible. Préférentiellement, la structure multizone du revêtement 20' selon l'invention permet de créer des motifs monochromes avec différents niveaux d'absorption de la lumière visible.

Le revêtement 20' comporte une sous couche 21 formant une couche de fond, configurée pour recouvrir le substrat 1, au moins sur une portion du substrat 1. Cette sous-couche 21 est identique à la sous-couche décrite précédemment en référence à la figure 1.

La structure multizone du revêtement 20' est formée par une pluralité de couches juxtaposées qui recouvrent respectivement une portion délimitée de la sous-couche 21.

La sous-couche 21 est recouverte par une première couche 22' au niveau d'une première portion délimitée de la sous-couche 21. La première couche 22' présente des pigments dont la taille moyenne (d90) est supérieure à la taille moyenne (d90) des pigments de la sous-couche 21.

La sous-couche 21 est également recouverte par une deuxième couche 23' au niveau d'une deuxième portion délimitée de la sous-couche 21, cette deuxième portion est différente de la première portion recouverte par la première couche 22'. Cette deuxième portion peut être juxtaposée ou non à la première portion.

La deuxième couche 23' présente des pigments dont la taille moyenne (d90) est supérieure à la taille moyenne (d90) des pigments de la première couche 22.

La sous-couche 21 peut également être recouverte par d'autres couches au niveau de différentes portions spécifiques de la sous-couche 21 de manière à créer un motif particulier avec des caractéristiques optiques particulières et des niveaux d'absorption de la lumière variable selon la taille des pigments utilisée.

A titre d'exemple, l'exemple de réalisation représenté à la figure 2 comporte une troisième couche 24' déposée localement sur la sous-couche 21 au niveau d'une troisième portion délimitée. Cette troisième portion est différente de la première portion recouverte par la première couche 22' et de la deuxième portion recouverte par la deuxième couche 23'. Cette troisième portion peut être juxtaposée à la première portion et/ou à la deuxième portion. En aucun cas, ces différentes couches appliquées sur la sous-couche 21 ne se superposent entre elles.

La troisième couche 24' présente des pigments dont la taille moyenne (d90) est supérieure à la taille moyenne (d90) des pigments de la deuxième couche 23'.

A titre d'exemple, les pigments des couches 22', 23', 24' recouvrant la sous-couche 21 sont de dimensions micrométriques.

A titre d'exemple, la première couche 22' comporte des pigments dont la taille moyenne (d90) est de taille micrométrique et inférieure à 20 µm, par exemple de l'ordre de 15 µm.

A titre d'exemple, la deuxième couche 23' comporte des pigments dont la taille moyenne (d90) est comprise entre 20 µm et 100 µm, préférentiellement de l'ordre de 80 µm.

A titre d'exemple, la troisième couche 24' comporte des pigments dont la taille moyenne (d90) est comprise entre 100 µm et 300 µm, préférentiellement de l'ordre de 250 µm.

Chaque couche 22', 23', 24' recouvrant partiellement la sous-couche 21 est formée respectivement par dépôt d'un mélange liquide au travers d'un ou d'une pluralité de masques appliqués sur la sous-couche 21 de manière à masquer certaines zones et à laisser apparaitre d'autres zones destinées à recevoir une couche avec une granulométrie prédéterminée.

Chaque couche 22', 23', 24' recouvrant partiellement la sous-couche 21 est formée respectivement par dépôt d'un mélange liquide comportant un liant, des pigments, et un solvant, la taille moyenne (d90) des pigments des différents mélanges liquides variant entre les différentes couches.

Chaque couche 22', 23', 24' recouvrant partiellement la sous-couche 21 est formée respectivement par dépôt d'un mélange liquide par pulvérisation, par sprayage, par trempage, par sérigraphie, par impression ou encore par tampographie.

Après application de chaque mélange sur la sous-couche 21, le solvant s'évapore pour permettre une polymérisation et une rétractation du liant autour des pigments formant ainsi les différentes couches avec des granulométries différentes.

Préférentiellement, le liant, la nature des pigments des différentes couches 22', 23', 24' sont identiques.

Optionnellement, les différentes couches du revêtement 20 peuvent comporter un agent matifiant, par exemple une nanosilice, pour accentuer davantage l'intensité du revêtement 20.

Optionnellement, les différentes couches du revêtement 20 peuvent comporter des billes de verre pour augmenter davantage la rugosité de l'empilement.

Préférentiellement, le liant des différentes couches du revêtement 20' est un polymère, par exemple un acrylique, un polymère époxyde ou encore un polyuréthane.

Par exemple, les différentes couches du revêtement 20 sont formées par l'application d'encres colorées, par exemple des encres noires comportant comme pigment du noir de carbone.

Préférentiellement, le liant, la nature des pigments des différentes couches du revêtement 20' sont identiques.

Toutefois, les pigments des différentes couches du revêtement 20' peuvent être de nature différente entre les différentes couches et par rapport aux pigments de la sous-couche 21.

La densité des pigments entre les différentes couches 22', 23', 24' peut être variable, préférentiellement décroissante avec l'augmentation de la taille moyenne des pigments.

Par exemple, la première couche 22' est réalisée à partir d'un mélange liquide comportant entre 4 et 10% en masse de pigments, préférentiellement entre 4 et 8%.

Par exemple, la deuxième couche 23' est réalisée à partir d'un mélange liquide comportant entre 1 et 5% en masse de pigments, préférentiellement entre 1 et 4%.

Par exemple, la troisième couche 24' est réalisée à partir d'un mélange liquide comportant entre 0.5 et 4% en masse de pigments, préférentiellement entre 0.5 et 1%.

A titre d'exemple, le substrat 1 est en laiton, par exemple pour la formation d'un cadran, sur lequel on vient appliquer un revêtement absorbant la lumière selon l'invention. Le substrat 1 en laiton présente par exemple une épaisseur de 0,27mm.

La sous-couche 21 est appliquée sur le substrat en laiton par trempage à partir d'un premier mélange liquide constitué de 2 g de résine polyuréthane (Berlacryl), de 0.5 g de pigments noir de carbone Emperor 1600 et 2.8 g de diluant Berlaflex. On laisse sécher la couche 20 minutes pour permettre l'évaporation du diluant.

La première couche 22' est appliquée sur la sous-couche 21 au travers d'un premier masque sélectif par trempage à partir d'un deuxième mélange liquide constitué de 2 g de résine polyuréthane (Berlacryl), de 0,3 g de pigments Living Ink et 3,5 g de diluant Berlaflex. On laisse sécher la couche 20 minutes pour permettre l'évaporation du diluant.

La deuxième couche 23' est appliquée sur la sous-couche 21 au travers d'un deuxième masque sélectif par trempage à partir d'un troisième mélange liquide constitué de 2 g de résine polyuréthane (Berlacryl), de 0,2 g de pigments Norit A ultra E153 et 4 g de diluant Berlaflex. On laisse sécher la couche 20 minutes pour permettre l'évaporation du diluant.

La troisième couche 24' appliquée sur la sous-couche 21 au travers d'un troisième masque sélectif par trempage à partir d'un quatrième mélange liquide constitué de 2 g de résine polyuréthane (Berlacryl), de 0,2 g de pigments carbone Norit SX super E153, de 1,5 g de billes de verre 90-150 µm et 4 g de diluant Berlaflex. On laisse sécher la couche 20 minutes pour permettre l'évaporation du diluant.

Avec un tel revêtement 10', on obtient un cadran en laiton avec un revêtement de surface noir présentant une composante de clarté L* de 16.

### Troisième exemple de réalisation

La figure 3 illustre schématiquement une vue en coupe d'un troisième exemple de réalisation d'un article 10", tel qu'un composant horloger, comportant un substrat 1 ainsi qu'un revêtement 20" décoratif et présentant des propriétés d'absorption de la lumière visible.

Le revêtement 20" recouvre au moins une portion du substrat 1. Un tel revêtement 20" selon l'invention forme une structure non uniforme comportant des agglomérats de pigments de différentes granulométries. Le revêtement 20" peut comporter plusieurs couches empilées comportant ces agglomérats de pigments.

La densité des agglomérats de pigments entre les différentes couches du revêtement 20" peut également être variable, préférentiellement décroissante avec l'augmentation du nombre de couches.

Ce troisième exemple de structure de revêtement 20" est sensiblement équivalent à la structure du revêtement 20 décrit en référence à la figure 1, à l'exception que les couches comportent des agglomérats composés d'une pluralité pigments de différentes granulométries.

La structure non uniforme du revêtement 20" permet d'éviter les phénomènes de réflexion avec la surface visible du revêtement. Le revêtement 20" permet également de diffuser la lumière dans la structure non uniforme créée par les différents agglomérats de pigments de différentes granulométries et éventuellement par les variations de densité de ces agglomérats entre les différentes couches superposées. Cela a pour conséquence de piéger au maximum la lumière, de manière à obtenir une haute absorption de la lumière.

Le revêtement 20" comporte une sous-couche 21 formant une couche de fond, configurée pour recouvrir le substrat 1, au moins sur une portion du substrat 1. Cette sous-couche 21 est identique à la sous-couche décrite précédemment en référence à la figure 1.

La sous-couche 21 est recouverte, au moins partiellement, par une première couche 22". Cette deuxième couche 22" peut faire partie d'un empilement 25 de plusieurs couches superposées l'une sur l'autre, l'empilement 25 recouvrant au moins partiellement la sous-couche 21.

La première couche 22 est formée par le dépôt, sur la sous-couche 21, d'une formulation comportant un liant, des agglomérats de pigments dispersés dans le liant, un solvant et un agent de couplage.

Une fois la formulation appliquée sur la sous-couche 21, le solvant s'évapore, le liant se rétracte autour des agglomérats de pigments créant ainsi la première couche 22" du revêtement 20".

La première couche 22" est constituée d'une pluralité d'agglomérats de pigments composés d'un mélange de pigments avec des granulométries différentes.

Préférentiellement, la première couche 22" est constituée d'agglomérats de pigments composés par le mélange de pigments dont la taille moyenne est de dimension nanométrique et de pigments dont la taille moyenne est de dimension micrométrique.

Préférentiellement, les agglomérats de pigments de la première couche 22" sont composés d'un pigment central de dimension micrométrique sur lequel est greffé chimiquement (par l'agent de couplage de la formulation) une pluralité de pigments de dimensions nanométriques, les pigments nanométriques étant couplés en périphérie du pigment central.

L'agent de couplage va permettre une interaction chimique forte entre les différents pigments.

Optionnellement, la première couche 22" peut comporter un agent matifiant, par exemple une nanosilice, pour accentuer davantage l'intensité du revêtement 20".

Préférentiellement, la formulation formant la première couche 22 comporte entre 4 et 8% en masse d'agglomérats de pigments dans la formulation.

Préférentiellement, le liant de la première couche 22" est un polymère, par exemple un acrylique, un polymère époxyde ou encore un polyuréthane. Par exemple, le liant est identique au liant de la sous-couche 21.

Par exemple, la première couche 22" est formée par l'application d'une encre colorée.

Par exemple, la première couche 22" est formée par l'application d'une encre noire présentant des pigments de noir de carbone.

Par exemple, l'agent de couplage pour la formation des agglomérats de pigments dans la formulation est un silane.

La première couche 22" est formée par pulvérisation, par sprayage, par trempage, par sérigraphie, par impression ou encore par tampographie de la formulation sur la sous-couche 21.

Comme représenté à titre d'exemple sur la figure 3, le revêtement 20 peut comporter une deuxième couche 23" recouvrant au moins partiellement la première couche 22". Cette deuxième couche 23" forme une deuxième couche de l'empilement 25, cet empilement pouvant comporter une pluralité de couches.

Cette deuxième couche 23" est également constituée d'une pluralité d'agglomérats de pigments composés d'un mélange de pigments avec des granulométries différentes.

Préférentiellement, la deuxième couche 23" est constituée d'agglomérats de pigments composés par le mélange de pigments dont la taille moyenne est de dimension nanométrique et de pigments dont la taille moyenne est de dimension micrométrique.

Préférentiellement, les agglomérats de pigments de la deuxième couche 23" sont composés d'un pigment central de dimension micrométrique sur lequel est greffé chimiquement une pluralité de pigments de dimensions nanométriques, les pigments nanométriques étant couplés à la périphérie du pigment central.

Préférentiellement, la taille moyenne des pigments des agglomérats de la deuxième couche 23" est identique à la taille moyenne des pigments constituant les agglomérats de la première couche 22".

Optionnellement, la deuxième couche 22" peut comporter un agent matifiant, par exemple une nanosilice, pour accentuer davantage l'intensité du revêtement 20".

Préférentiellement, la formulation formant la deuxième couche 23" comporte entre 1% et 4% en masse de pigments dans la formulation.

Préférentiellement, la deuxième couche 23" comporte une proportion en masse d'agglomérats inférieure à la proportion en masse d'agglomérats de la première couche 22".

Préférentiellement, le liant de la deuxième couche 23" est un polymère, par exemple un acrylique, un polymère époxyde ou encore un polyuréthane. Préférentiellement, le liant des différentes couches de l'empilement 25 est identique.

Par exemple, la deuxième couche 23" est formée par application d'une encre colorée.

Par exemple, la deuxième couche 23" est formée par application d'une encre noire présentant des pigments de noir de carbone.

La deuxième couche 22" est formée par pulvérisation, par sprayage, par trempage, par sérigraphie, par impression ou encore par tampographie de la formulation sur la première couche 22".

A titre d'exemple, le substrat 1 est en laiton, par exemple pour la formation d'un cadran, sur lequel on vient appliquer un revêtement absorbant la lumière 10" selon l'invention. Le substrat en laiton présente par exemple une épaisseur de 0,27mm.

La sous-couche 21 est appliquée sur le substrat en laiton par trempage à partir d'une première formulation constituée de 2 g de résine polyuréthane (Berlacryl), de 0.5 g de pigments noir de carbone Emperor 1600 et 2.8 g de diluant Berlaflex. On laisse sécher 20 minutes la première couche 21 pour permettre l'évaporation du diluant.

Les agglomérats de pigments composant la deuxième solution sont préparés préalablement à partir d'une solution d'alcool isopropylique à 5% en organosilane (par exemple Methoxysilane) avec mise en suspension des pigments de taille micrométrique et des pigments de taille nanométrique. La solution est séchée et la poudre d'agglomérats formés récupérée.

La première couche 22" du revêtement 20" est appliquée sur la sous-couche 21 par trempage à partir d'une deuxième formulation constituée de 2 g de résine polyuréthane (Berlacryl), de 0,3 g de poudre d'agglomérats et 2.8 g de diluant Berlaflex. On laisse sécher 20 minutes la deuxième couche 22 pour permettre l'évaporation du diluant.

Avec un tel revêtement 20", on obtient un cadran en laiton avec un revêtement de surface noir présentant une composante de clarté L* de 16.

## Revendications

1. Article (10, 10', 10") comportant un substrat (1) et un revêtement multicouche (20, 20', 20") déposé sur le substrat (1), le revêtement (20, 20', 20") étant formé par l'association d'une pluralité de couches (21, 22, 22', 22", 23, 23', 23", 24, 24') comportant un liant et des pigments, le revêtement (20, 20', 20") comportant des pigments de différentes granulométries.

2. Article (10, 10', 10") selon la revendication précédente **caractérisé en ce que** le revêtement (20, 20', 20") comporte des pigments de dimensions nanométriques et de dimensions micrométriques.

3. Article (10, 10', 10") selon la revendication précédente **caractérisé en ce que** le revêtement (20, 20', 20") comporte des billes de verre.

4. Article (10, 10', 10") selon l'une des revendications précédentes, **caractérisé en ce que** le revêtement (20, 20', 20") comporte une sous-couche (21) recouvrant au moins une portion du substrat (1), la sous-couche (21) comportant des pigments dont la taille moyenne est de dimension nanométrique.

5. Article (10') selon l'une des revendications précédentes **caractérisé en ce que** le revêtement (20) comporte un empilement (25) d'une pluralité de couches successives (22, 23, 24), superposées les unes sur les autres, recouvrant au moins partiellement la sous-couche (21), chacune des couches successives (22, 23, 24) de l'empilement (25) comportant des pigments dont la taille moyenne (d90) est différente de la taille moyenne des pigments de la couche qu'elle recouvre.

6. Article (10') selon la revendication précédente **caractérisé en ce que** chacune des couches successives (22, 23, 24) de l'empilement (25) comporte des pigments dont la taille moyenne (d90) est supérieure à la taille moyenne (d90) des pigments de la couche qu'elle recouvre.

7. Article (10') selon la revendication précédente **caractérisé en ce que** chaque couche (n) de l'empilement (25) présente des pigments dont la taille moyenne (d90) équivaut à *n* * *k*/10 µm, où k est un facteur d'homothétie entre la taille moyenne (d90) des pigments de deux couches consécutives de l'empilement (25).

8. Article (10') selon l'une des revendications 1 à 4 **caractérisé en ce que** le revêtement (20') comporte une pluralité de couches (22', 23', 24') de différentes granulométries qui sont juxtaposées les unes par rapport aux autres et qui recouvrent respectivement une portion prédéterminée de la sous-couche (21).

9. Article (10') selon la revendication précédente **caractérisé en ce que** les pigments de la pluralité de couches (22', 23', 24') recouvrant la sous-couche (21) sont de dimensions micrométriques.

10. Article (10') selon l'une des revendications 8 à 9 **caractérisé en ce que** le revêtement (20') comporte une première couche (22') recouvrant au moins partiellement une première portion de la sous-couche (21) et une deuxième couche (23', 24') juxtaposée à la première couche (22') et recouvrant au moins partiellement une deuxième portion de la sous-couche (21), différente de la première portion, les pigments de la deuxième couche (23', 24') présentant une taille moyenne (d90) supérieure à la taille moyenne (d90) des pigments de la première couche (22').

11. Article (10") selon l'une des revendications 1 à 4 **caractérisé en ce que** le revêtement (20") comporte une première couche (22") recouvrant au moins partiellement la sous-couche (21), la première couche (22") comportant des agglomérats de pigments composés par un mélange de pigments avec des granulométries différentes.

12. Article (10') selon la revendication précédente **caractérisé en ce que** la première couche (22") comporte des agglomérats de pigments composés par le mélange de pigments dont la taille moyenne (d90) est de dimension nanométrique et de pigments dont la taille moyenne (d90) est de dimension micrométrique.

13. Article (10") selon l'une des revendications 11 à 12 **caractérisé en ce que** les agglomérats de pigments de la première couche (22") sont constitués d'un pigment central de dimension micrométrique sur lequel est greffé chimiquement en périphérie une pluralité de pigments de dimensions nanométriques.

14. Article (10, 10', 10") selon l'une des revendications 1 à 13 **caractérisé en ce que** le liant de la pluralité de couches (21, 22, 22', 22", 23, 23', 23", 24, 24') du revêtement (20, 20', 20") est un polymère.

15. Article (10, 10', 10") selon la revendication 14 **caractérisé en ce que** le liant de la pluralité de couches (21, 22, 22', 22", 23, 23', 23", 24, 24') du revêtement (20, 20', 20") est un acrylique, un polymère époxyde ou encore un polyuréthane.

16. Article (10, 10', 10") selon l'une des revendications 1 à 15 **caractérisé en ce que** les pigments de la pluralité de couches (21, 22, 22', 22", 23, 23', 23", 24, 24') du revêtement (20, 20', 20") sont du noir de carbone.

17. Article (10, 10', 10") selon l'une des revendications 1 à 16 **caractérisé en ce que** le revêtement (20, 20', 20") présente une composante de clarté L* inférieure à 20.

18. Article (10, 10', 10") selon l'une des revendications 1 à 17 **caractérisé en ce que** l'article est un composant horloger.

19. Pièce d'horlogerie (200) **caractérisée en ce qu'**elle comporte un composant horloger selon la revendication précédente.
